# EUROPÄISCHE PATENTSCHRIFT

(11) **EP 0 606 831 B1**
(45) Veröffentlichungstag und Bekanntmachung des Hinweises auf die Patenterteilung: **12.05.1999**
(21) Anmeldenummer: 94100003.6
(22) Anmeldetag: 03.01.1994
(51) Int. Cl.: C07F 9/38, C07F 9/30, D06M 13/447, C09K 3/18

(54) **Hydroxy- und/oder mercaptogruppenhaltige fluorierte Carbonsäureester von Phosphono- und Phosphinocarbonsäuren, ein Verfahren zu ihrer Herstellung sowie deren Verwendung**
Fluorinated carboxylic acid esters of phosphono and phosphino carboxylic acids containing an hydroxy and/or mercapto group, process for their preparation and their use
Esters carboxyliques fluorés d'acides phosphono et phosphinocarboxyliques, contenant un groupe hydroxy et/ou mercapto, leur procédé de préparation ainsi que leur utilisation

(30) Priorität: 14.01.1993 DE 4300800
(43) Veröffentlichungstag der Anmeldung: 20.07.1994
(73) Patentinhaber: BAYER AG, 51368 Leverkusen (DE)
(72) Erfinder: Pohmer, Klaus, Dr., D-51061 Köln (DE); Weber, Rainer, Dr., D-51519 Odenthal (DE); Block, Hans-Dieter, Dr., D-51381 Leverkusen (DE); Moretto, Hans-Heinrich, Dr., D-51375 Leverkusen (DE)

(56) Entgegenhaltungen:
- EP-A- 0 238 825
- DE-A- 2 424 243
- DE-A- 2 439 281

## Beschreibung

Die vorliegende Erfindung betrifft hydroxy- und/oder mercaptogruppenhaltige fluorierte Carbonsäureester von Phosphono- und Phosphinocarbonsäuren, deren Verwendung als Hydrophobier- und/oder Oleophobiermittel sowie ein Verfahren zu ihrer Herstellung.

Perfluoralkylgruppenhaltige Verbindungen finden aufgrund ihrer hydro- und oleophobierenden Eigenschaften vielfaltige Anwendung in Imprägniermitteln in der Technik (vgl. Ullmann, Encyclopädie der technischen Chemie, 4. Auflage 1976, Band 11, S. 644 und ibd., 5. Auflage 1988, Band A11, S. 373/374). Typische Anwendungen sind der Einsatz als Imprägniermittel zur Hydro- und Oleophobierung von Textilien (vgl. Ullmann, Encyclopädie der technischen Chemie, 4. Auflage 1983, Band 23, S. 87), Leder (vgl. Ullmann, Encyclopädie der technischen Chemie, 4. Auflage 1978, Band 16, S. 168) und Papier (vgl. J.N. Meußdoerffer und H. Niederprüm, Chemikerzeitung 104 (1980) 45-52).

Beispiele für solche Phobiermittel sind perfluorgruppenhaltige Alkohole und Acrylate oder deren Polymerdispersionen (vgl. J.N. Meußdoerffer und H. Niederprüm, Chemikerzeitung 104 (1980) 45-52 und Ullmann, Encyclopädie der technischen Chemie, 4. Auflage 1983, Band 23, S. 87). Wege zu deren Synthese sind in J.N. Meußdoerffer und H. Niederprüm, Chemikerzeitung 104 (1980) 45-52 beschrieben.

Die perfluorierten Ausgangsverbindungen der obengenannten Fluortenside sind technisch auf drei unterschiedlichen Synthesewegen zugänglich:
a) elektrochemische Fluorierung,
b) Telomerisation von Perfluorolefinen, insbesondere Tetrafluorethylen,
c) Oligomerisierung von Tetrafluorethylen.

Da die obengenannten Methoden zur Herstellung der perfluorierten Ausgangsverbindungen technisch sehr aufwendig sind, resultieren hohe Kosten bei der Herstellung der gewünschten perfluorgruppenhaltigen chemischen Verbindungen.

Aufgabe war es, fluorgruppenhaltige organomodifizierte Verbindungen zur Verfügung zu stellen, die hydrophobierende und/oder oleophobierende Eigenschaften aufweisen und deren Herstellung einfach und kostengünstig möglich ist.

Diese Aufgabe konnte durch die erfindungsgemäßen hydroxy- und/oder mercaptogruppenhaltigen fluorierten Carbonsäureestern von Phosphono- oder Phosphinocarbonsäuren gelöst werden.

Gegenstand der Erfindung sind hydroxy- und/oder mercaptogruppenhaltige fluorierte Carbonsäureester von Phosphono- oder Phosphinocarbonsäuren der allgemeinen Formel (I) 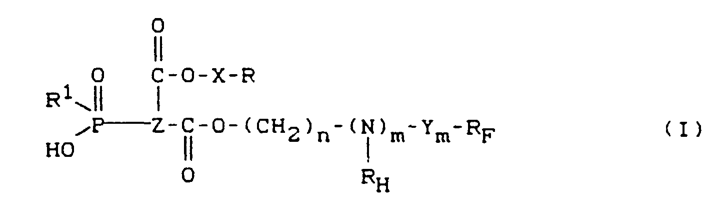 worin
- R¹: eine Hydroxylgruppe, eine Methylgruppe, eine Ethylgruppe oder ein Phenylrest ist,
- R_{F}: ein linearer oder verzweigter Fluoralkylrest mit 1 bis 18 Kohlenstoffatomen ist, oder ein fluorierter, verzweigter oder linearer Mono- oder Polyether mit 1 bis 18 Kohlenstoffatomen ist,
- R_{H}: ein linearer oder verzweigter Alkylrest mit 1 bis 10 Kohlenstoffatomen ist,
- R: eine Hydroxy- oder eine Mercaptogruppe ist,
- X: für einen linearen oder verzweigten Alkylenrest mit 1 bis 20 Kohlenstoffatomen oder für einen durch eine oder mehrere Gruppen R substituierten, linearen oder verzweigten Alkylenrest mit 1 bis 20 Kohlenstoffatomen steht, wobei R dieselbe Bedeutung wie oben hat,
- Y: eine 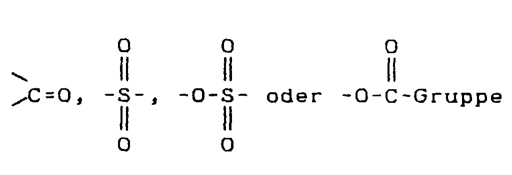 darstellt,
- Z: für einen linearen oder verzweigten Alkantriylrest (dreiwertiger Kohlenwasserstoffrest) mit 1 bis 20 Kohlenstoffatomen oder für einen durch Aminogruppen, die ihrerseits durch C₁- bis C₁₀-Alkylgruppen oder Arylgruppen substituiert sein können, unterbrochenen, linearen oder verzweigten Alkantriylrest mit 1 bis 20 Kohlenstoffatomen oder für einen durch eine oder mehrere Gruppen der Struktur -COR² substituierten, linearen oder verzweigten Alkantriylrest mit 1 bis 20 Kohlenstoffatomen oder für einen durch eine oder mehrere Gruppen der Struktur -PO₂HR¹ substituierten, linearen oder verzweigten Alkantriylrest mit 1 bis 20 Kohlenstoffatomen steht, wobei R¹ dieselbe Bedeutung wie oben hat,
- m: eine 0 oder 1 sein kann,
- n: eine ganze Zahl von 0 bis 6 darstellt und
- R²: für einen Hydroxylrest oder einen Rest der Struktur 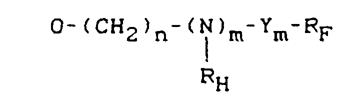 oder einen Rest der Struktur O-X-R oder für einen linearen oder verzweigten Alkoxyrest mi 1 bis 30 Kohlenstoffatomen steht, wobei n, m, R_{H}, R_{F}, R, X und Y die gleiche Bedeutung wie oben haben,
und deren Salze.

Hydroxy- und/oder mercaptogruppenhaltige fluorierte Carbonsäureester von Phosphono- oder Phosphinocarbonsäuren sind vorzugsweise solche, bei denen R_{F} ein linearer oder verzweigter Fluoralkylrest mit 3 bis 10 Kohlenstoffatomen ist.

Bevorzugt sind hydroxy- und/oder mercaptogruppenhaltige fluorierte Carbonsäureester von Phosphono- oder Phosphinocarbonsäuren, bei denen R_{H} für einen Alkylrest mit einem oder zwei Kohlenstoffatomen steht.

Besonders bevorzugt sind hydroxy und/oder mercaptogruppenhaltige fluorierte Carbonsäureester von Phosphono- oder Phosphinocarbonsäuren, bei denen n eins oder zwei ist.

Hydroxy- und/oder mercaptogruppenhaltige fluorierte Carbonsäureester von Phosphono- oder Phosphinocarbonsäuren, in denen m gleich eins ist, sind besonders bevorzugt.

Besonders bevorzugte hydroxy- und/oder mercaptogruppenhaltige fluorierte Carbonsäureester von Phosphono- oder Phosphinocarbonsäuren weisen beispielsweise folgende Struktur auf:

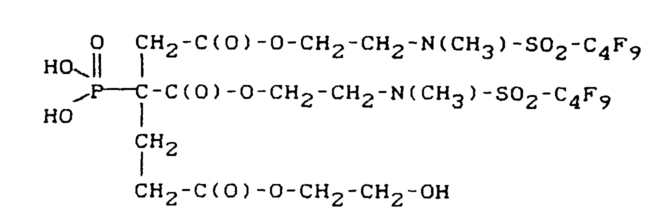

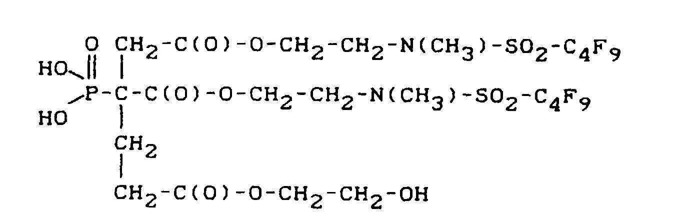

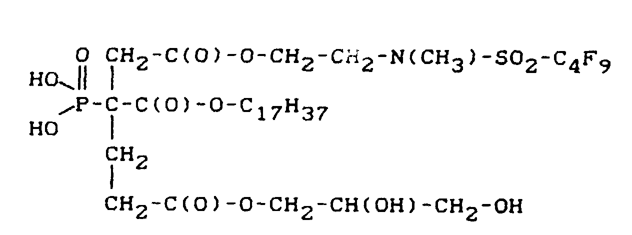

Besonders bevorzugt sind die im folgenden aufgelisteten Reste:

Beispiele für R_{F}:

CF₃-(CF₂)₂-

CF₃-(CF₂)₃-

CF₃-(CF₂)₅-

CF₃-(CF₂)₆-

CF₃-(CF₂)₇-

CF₃-(CF₂)₁₁-

C₅F₅-

CF₃-C₆F₄-

H-(CF₂)₆-

H-(CF₂)₂-O-

CF₃-CHF-CF₂-O-

CF₂-CF₂-CF₂-O-CF(CF₃)-

CF₃-CF₂-[CF₂-O-CF(CF₃)]₂-

CF₃-CF₂-[CF₂-O-CF(CF₃)]₃-

Beispiele für Z:

〉CH-, 〉C(CH₃)-,

〉CH-CH₂-,

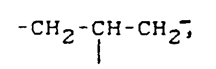

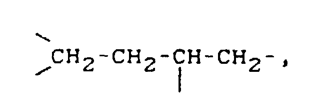

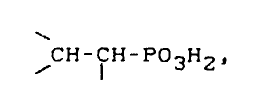

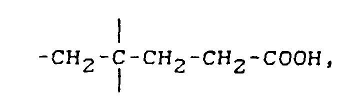

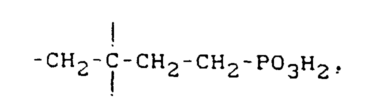

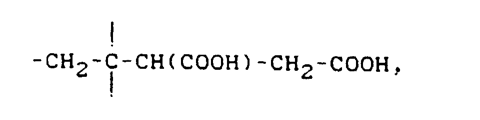

〉CH-CH₂-CH₂-,

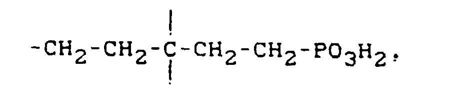

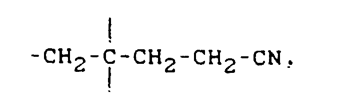

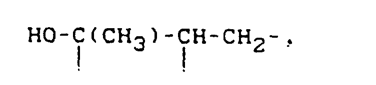

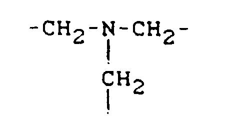

Die erfindungsgemäßen hydroxy- und/oder mercaptogruppenhaltigen fluorierten Carbonsaureester von Phosphono- oder Phosphinocarbonsäuren lassen sich z.B. durch mehrstufige Synthese in Veresterungsreaktionen der entsprechenden Phosphono- oder Phosphinocarbonsauren oder deren Salzen mit fluorgruppenhaltigen Alkoholen und mehrwertigen Alkoholen bzw. hydroxyfunktionellen Thiolen darstellen: 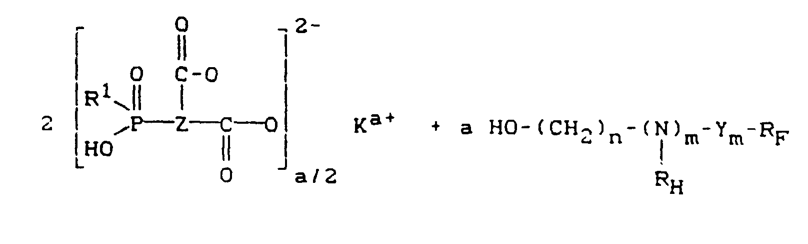 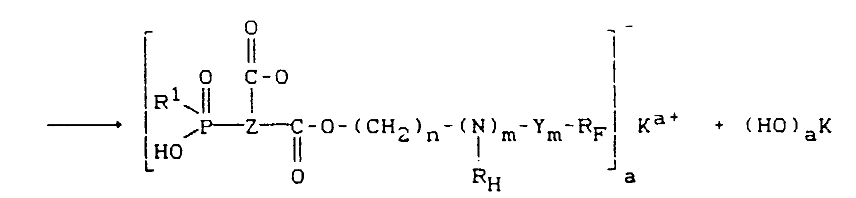 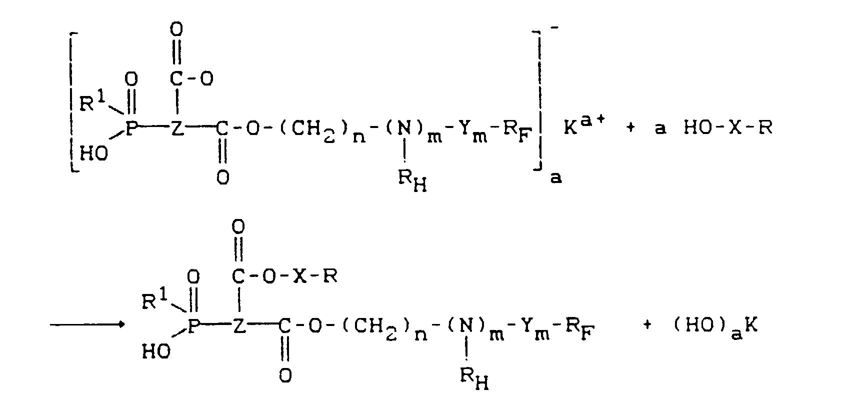 wobei
R¹, R, R_{F}, R_{H}, X, Y, Z, m und n dieselbe Bedeutung wie oben haben,
- K: ein Wasserstoffkation, ein Ammoniumkation oder ein ein- oder mehrwertiges Metallkation ist,
- a: eine ganze Zahl ist, die der Ladung des Kations K entspricht.

Ein weiterer Gegenstand der Erfindung ist die Verwendung der erfindungsgemäßen hydroxy- und/oder mercaptogruppenhaltigen fluorierten Carbonsäureester von Phosphono- oder Phosphinocarbonsäuren als Hydrophobier- und/oder Oleophobiermittel.

Aufgrund der hydrophibierenden und oleophobierenden Eigenschaften der erfindungsgemäßen Verbindungen können sie als Imprägniermittel in verschiedenen Anwendungsgebieten eingesetzt werden, wobei die Applikation beispielsweise in Form der erfindungsgemäßen Verbindungen an sich oder in Form von Polymerdispersionen erfolgen kann.

Auf Natur- und Kunstfasern (z.B. für Textilien, Teppiche oder Markisen) können die erfindungsgemäßen Verbindungen beispielsweise zur Abweisung von Wasser, Fetten, Ölen und/oder Schmutz eingesetzt werden.

Auf Papieren und Kartonagen (z.B. für Verpackungen oder Vliesstoffe) können die erfindungsgemäßen Verbindungen ebenfalls zur Abweisung von Wasser, Fetten, Ölen und/oder Schmutz eingesetzt werden.

Auch auf Leder (z.B. für Polster, Schuhe oder Bekleidung) finden die erfindungsgemäßen Verbindungen zur Abweisung von Wasser, Fetten, Ölen und/oder Schmutz Verwendung.

Ebenso können die erfindungsgemäßen Verbindungen auf Keramiken (z.B. Fliesen), auf Natur- oder Kunststeinen (z.B. Sandsteine), auf Holz (z.B. Holzverkleidung an Fassaden) und auf Kunststoffen (z.B. Polyester) zur Imprägnierung gegen Wasser, Fette, Öle, Schmutz, Algenbewuchs und/oder Verwitterung verwendet werden.

Die Erfindung soll anhand der nachfolgenden Beispiele näher erläutert werden.

### Beispiel 1

In einer Dreihalskolben-Rührapparatur mit Wasserabscheider werden 1,0 mol (357 g) N-(2-Hydroxyethyl)-N-methylperfluorbutylsulfonamid in 200 ml 4-Methyl-pentan-2-on gelöst und mit 0,5 ml konzentrierter Schwefelsäure versetzt. Diese Lösung wird auf ca. 116°C erhitzt. Anschließend versetzt man langsam mit 0,5 mol (135 g) in 135 g Wasser gelöster 2-Phosphonobutan-1,2,4-tricarbonsäure. Nach erfolgter Zugabe wird solange am Rückfluß gerührt, bis die komplette Menge Wasser (153 ml) aus dem Reaktionsaemisch abdestilliert ist.

Anschließend versetzt man langsam mit 0,5 mol (31 g) Ethandiol und rührt solange am Rückfluß, bis die komplette Menge Wasser (9 ml) aus dem Reaktionsgemisch abdestilliert ist.

Nach erfolgter Reaktion wird das Lösungsmittel bei 70°C und 70 mbar abdestilliert und das erhaltene Produkt vollständig getrocknet. Die Ausbeute der mit zwei Äquivalenten N-(2-Hydroxyethyl)-N-methyl-perfluorbutylsulfonamid und einem Äquivalent Ethandiol dreifach veresterten 2-Phosphonobutan-1,2,4-tricarbonsäure beträgt 491 g (entsprechend 98,9 % der Theorie).

### Beispiel 2

In einer Dreihalskolben-Rührapparatur mit Wasserabscheider werden 0,6 mol (214 g) N-(2-Hydroxyethyl)-N-methyl-perfluorbutylsulfonamid in 150 ml 4-Methylpentan-2-on gelöst und mit 0,5 ml konzentrierter Schwefelsäure versetzt. Diese Lösung wird auf ca. 116°C erhitzt. Anschließend versetzt man langsam mit 0,3 mol (81 g) in 81 g Wasser gelöster 2-Phosphonobutan-1,2,4-tricarbonsäure. Nach erfolgter Zugabe wird solange am Rückfluß gerührt, bis die komplette Menge Wasser (91,8 ml) aus dem Reaktionsgemisch abdestilliert ist.

Anschließend versetzt man langsam mit 0,3 mol (28 g) Propantriol und rührt solange am Rückfluß, bis die komplette Menge Wasser (3,6 ml) aus dem Reaktionsgemisch abdestilliert ist.

Nach erfolgter Reaktion wird das Lösungsmittel bei 70°C und 70 mbar abdestilliert und das erhaltene Produkt vollständig getrocknet. Die Ausbeute der mit zwei Äquivalenten N-(2-Hydroxyethyl)-N-methyl-perfluorbutylsulfonamid und einem Äquivalent Propantriol dreifach veresterten 2-Phosphonobutan-1,2,4-tricarbonsäure beträgt 305 g (entsprechend 99,5 % der Theorie).

### Beispiel 3

In einer Dreihalbkolben-Rührapparatur mit Wasserabscheider werden 0,1 mol (56 g) N-(2-Hydroxethyl)-N-methyl-perfluoroctylsulfonamid in 150 ml 4-Methylpentan-2-on gelöst und mit 0,5 ml konzentrierter Schwefelsäure versetzt. Diese Lösung wird auf ca. 116°C erhitzt. Anschließend versetzt man langsam mit 0,1 mol (27 g) in 27 g Wasser gelöster 2-Phosphonobutan-1,2,4-tricarbonsäure. Nach erfolgter Zugabe wird solange am Rückfluß gerührt, bis die komplette Menge Wasser (28,8 ml) aus dem Reaktionsgemisch abdestilliert ist.

Anschließend versetzt man langsam mit 0,1 mol (28 g) in 50 ml 4-Methyl-pentan-2-on gelöstem Octadecanol und rührt solange am Rückfluß, bis die komplette Menge Wasser (1,8 ml) aus dem Reaktionsgemisch abdestilliert ist.

Abschließend versetzt man langsam mit 0,1 mol (6 g) Ethandiol und rührt solange am Rückfluß, bis die komplette Menge Wasser (1,8 ml) aus dem Reaktionsgemisch abdestilliert ist.

Nach erfolgter Reaktion wird das Lösungsmittel bei 70°C und 70 mbar abdestilliert und das erhaltene Produkt vollständig getrocknet. Die Ausbeute der mit je einem Äquivalent N-(2-Hydroxyethyl)-N-methyl-perfluoroctylsulfonamid, Octadecanol und Ethandiol dreifach veresterten 2-Phosphonobutan-1,2,4-tricarbonsäure beträgt 109 g (entsprechend 98,8 % der Theorie).

## Patentansprüche

1. Hydroxy- und/oder mercaptogruppenhaltige fluorierte Carbonsäureester von Phosphono- oder Phosphinocarbonsäuren der allgemeinen Formel (I) 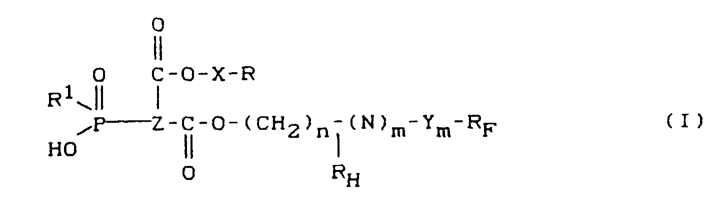 worin
R¹ eine Hydroxylgruppe, eine Methylgruppe, eine Ethylgruppe oder ein Phenylrest ist,
R_{F} ein linearer oder verzweigter Fluoralkylrest mit 1 bis 18 Kohlenstoffatomen ist, oder ein fluorierter, verzweigter oder linearer Mono- oder Polyether mit 1 bis 18 Kohlenstoffatomen ist,
R_{H} ein linearer oder verzweigter Alkylrest mit 1 bis 10 Kohlenstoffatomen ist,
R eine Hydroxy- oder eine Mercaptogruppe ist,
X für einen linearen oder verzweigten Alkylenrest mit 1 bis 20 Kohlenstoffatomen oder für einen durch eine oder mehrere Gruppen R substituierten, linearen oder verzweigten Alkylenrest mit 1 bis 20 Kohlenstoffatomen steht, wobei R dieselbe Bedeutung wie oben hat,
Y eine 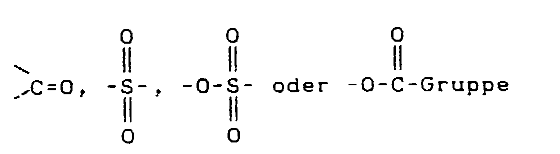 darstellt,
Z für einen linearen oder verzweigten Alkantriylrest mit 1 bis 20 Kohlenstoffatomen oder für einen durch Aminogruppen, die ihrerseits durch C₁-bis C₁₀-Alkylgruppen oder Arylgruppen substituiert sein können, unterbrochenen, linearen oder verzweigten Alkantriylrest mit 1 bis 20 Kohlenstoffatomen oder für einen durch eine oder mehrere Gruppen der Struktur -COR² substituierten. linearen oder verzweigten Alkantriylrest mit 1 bis 20 Kohlenstoffatomen oder für einen durch eine oder mehrere Gruppen der Struktur -PO₂HR¹ substituierten, linearen oder verzweigten Alkantriylrest mit 1 bis 20 Kohlenstoffatomen steht, wobei R¹ dieselbe Bedeutung wie oben hat,
m eine 0 oder 1 sein kann,
n eine ganze Zahl von 0 bis 6 darstellt und
R² für einen Hydroxylrest oder einen Rest der Struktur 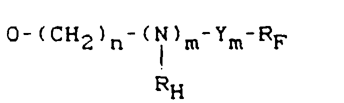 oder einen Rest der Struktur O-X-R oder für einen linearen oder verzweigten Alkoxyrest mi 1 bis 30 Kohlenstoffatomensteht, wobei n, m, R_{H}, R_{F}, R, X und Y die gleiche Bedeutung wie oben haben,
und deren Salze.

2. Hydroxy- und/oder mercaptogruppenhaltige fluorierte Carbonsäureester von Phosphono- oder Phosphinocarbonsäuren gemäß Anspruch 1, dadurch gekennzeichnet, daß R_{F} ein linearer oder verzweigter Fluoralkylrest mit 3 bis 10 Kohlenstoffatomen ist.

3. Hydroxy- und/oder mercaptogruppenhaltige fluorierte Carbonsäureester von Phosphono- oder Phosphinocarbonsäuren gemäß Anspruch 1, dadurch gekennzeichnet, daß R_{H} für einen Alkylrest mit einem oder zwei Kohlenstoffatomen steht.

4. Verbindungen gemäß Anspruch 1, dadurch gekennzeichnet, daß n eins oder zwei ist.

5. Verbindungen gemäß Anspruch 1, dadurch gekennzeichnet, daß m gleich eins ist.

6. Verfahren zur Herstellung der hydroxy- und/oder mercaptogruppenhaltigen fluorierten Carbonsäureester von Phosphono- oder Phosphinocarbonsäuren gemäß den Ansprüchen 1 bis 5, dadurch gekenzeichnet, daß in einer mehrstufigen Synthese die entsprechenden Phosphono- oder Phosphinocarbonsäuren der Formel (II) oder deren Salze 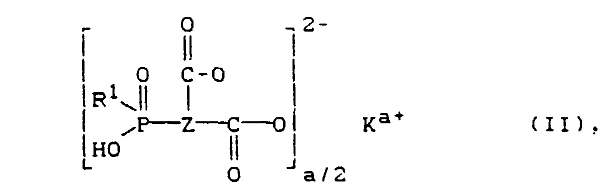 wobei K ein Wasserstoffkation, ein Ammoniumkation oder ein ein- oder mehrwertiges Metallkation und a eine ganze Zahl, die der Ladung des Kations K entspricht, sind und R¹ und Z dieselbe Bedeutung wie oben haben,
im ersten Schritt mit den entsprechenden fluorgruppenhaltigen Alkoholen der Formel (III) 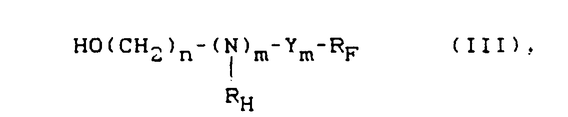 wobei n, m, R_{H}, Y und R_{F} dieselbe Bedeutung wie oben haben,
und in einem weiteren Schritt mit den entsprechenden mehrwertigen Alkoholen oder hydroxyfunktionellen Thiolen der Formel (IV)
HO-X-R (IV),
wobei X und R dieselbe Bedeutung wie oben haben, verestert werden.

7. Verwendung der erfindungsgemäßen hydroxy- und/oder mercaptogruppenhaltigen fluorierten Carbonsäureester von Phosphono- oder Phosphinocarbonsäuren als Hydrophobier- und/oder Oleophobiermittel.

## Claims

1. Hydroxyl- and/or mercapto-containing fluorinated carboxylic esters of phosphonocarboxylic or phosphinocarboxylic acids of the general formula (I) 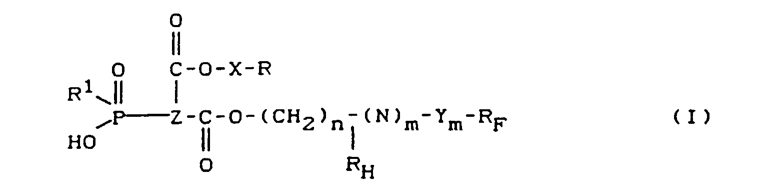 where
R¹ is a hydroxyl group, a methyl group, an ethyl group or a phenyl radical,
R_{F} is a linear or branched fluoroalkyl radical having from 1 to 18 carbon atoms or a fluorinated, branched or linear monoether or polyether having from 1 to 18 carbon atoms,
R_{H} is a linear or branched alkyl radical having from 1 to 10 carbon atoms,
R is a hydroxy group or a mercapto group,
X represents a linear or branched alkylene radical having from 1 to 20 carbon atoms or a linear or branched alkylene radical having from 1 to 20 carbon atoms which is substituted by one or more groups R, where R is as defined above,
Y is a 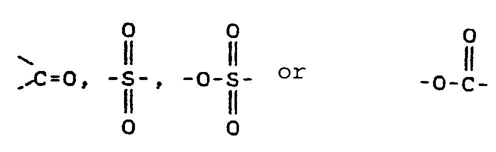 group,
Z represents a linear or branched alkanetriyl radical having from 1 to 20 carbon atoms or a linear or branched alkanetriyl radical having from 1 to 20 carbon atoms which is interrupted by amino groups which may in turn bear C₁-C₁₀-alkyl groups or aryl groups as substituents or a linear or branched alkanetriyl radical having from 1 to 20 carbon atoms bearing one or more groups of the structure -COR² as substituents or a linear or branched alkanetriyl radical having from 1 to 20 carbon atoms bearing one or more groups of the structure -PO₂HR¹ as substituents, where R¹ is as defined above,
m can be 0 or 1,
n is an integer from 0 to 6 and
R² is a hydroxyl radical or a radical of the structure 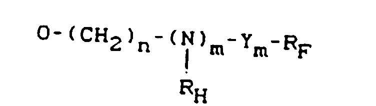 or a radical of the structure O-X-R or a linear or branched alkoxy radical having from 1 to 30 carbon atoms, where n, m, R_{H}, R_{F}, R, X and Y are as defined above,
and their salts.

2. Hydroxyl- and/or mercapto-containing fluorinated carboxylic esters of phosphonocarboxylic or phosphinocarboxylic acids according to Claim 1, characterized in that R_{F} is a linear or branched fluoroalkyl radical having from 3 to 10 carbon atoms.

3. Hydroxyl- and/or mercapto-containing fluorinated carboxylic esters of phosphonocarboxylic or phosphinocarboxylic acids according to Claim 1, characterized in that R_{H} represents an alkyl radical having one or two carbon atoms.

4. Compounds according to Claim 1, characterized in that n is one or two.

5. Compounds according to Claim 1, characterized in that m is one.

6. Process for preparing the hydroxyl- and/or mercapto-containing fluorinated carboxylic esters of phosphonocarboxylic or phosphinocarboxylic acids according to Claims 1 to 5, characterized in that, in a multistage synthesis, the corresponding phosphonocarboxylic or phosphinocarboxylic acids of the formula (II) or their salts 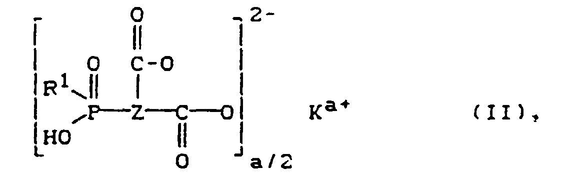 where K is a hydrogen cation, an ammonium cation or a monovalent or polyvalent metal cation and a is an integer corresponding to the charge on the cation K, and R¹ and Z are as defined above,
are in a first step esterified with the corresponding fluorinated alcohols of the formula (III) 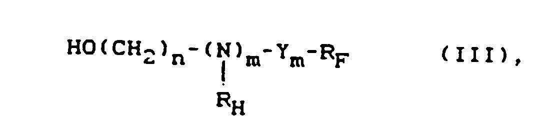 where n, m, R_{H}, Y and R_{F} are as defined above,
and in a further step esterified with the corresponding polyhydric alcohols or hydroxy-functional thiols of the formula (IV)
HO-X-R (IV),
where X and R are as defined above.

7. Use of the hydroxyl- and/or mercapto-containing fluorinated carboxylic esters of phosphonocarboxylic or phosphinocarboxylic acids of the invention as hydrophobicizing and/or oleophobicizing agent.

## Revendications

1. Esters d'acides carboxyliques fluorés contenant des groupes hydroxy et/ou mercapto et d'acides phosphono- ou phosphino-carboxyliques de formule générale (I) 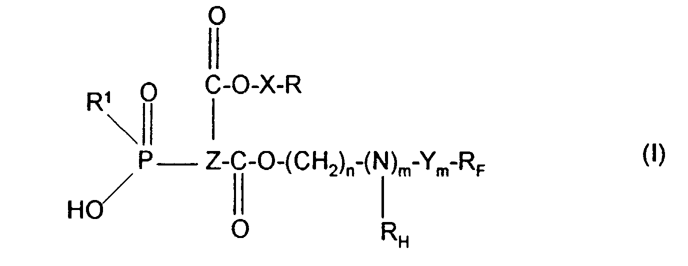 dans laquelle
R¹ représente un groupe hydroxy, un groupe méthyle, un groupe éthyle ou un groupe phényle,
R_{F} représente un groupe fluoralkyle linéaire ou ramifié en C₁-C₁₈ ou un mono- ou poly- éther fluoré, linéaire ou ramifié, en C₁-C₁₈,
R_{H} représente un groupe alkyle linéaire ou ramifié en C₁-C₁₀,
R représente un groupe hydroxy ou mercapto,
X représente un groupe alkylène linéaire ou ramifié en C₁-C₂₀ ou un groupe alkylène linéaire ou ramifié en C₁-C₂₀ qui est substitué par un ou plusieurs groupes R, R ayant les significations indiquées ci-dessus,
Y représente un groupe 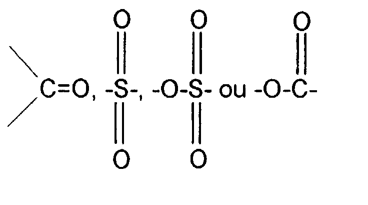
Z représente un groupe alcanetriyle linéaire ou ramifié en C₁-C₂₀ ou un groupe alcanetriyle linéaire ou ramifié en C₁-C₂₀ interrompu par des groupes amino qui peuvent eux-mêmes être substitués par des groupes alkyles en C₁-C₁₀ ou des groupes aryles, ou un groupe alcanetriyle linéaire ou ramifié en C₁-C₂₀ substitué par un ou plusieurs groupes de structure -COR², ou un groupe alcanetriyle linéaire ou ramifié en C₁-C₂₀ substitué par un ou plusieurs groupes de structure -PO₂HR¹, R¹ ayant les significations indiquées ci-dessus,
m est égal à 0 ou 1,
n est un nombre entier allant de 0 à 6 et
R² représente un groupe hydroxyle ou un groupe de structure 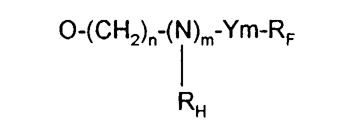 ou un groupe de structure O-X-R ou un groupe alcoxy linéaire ou ramifié en
C₁-C₃₀, n, m, R_{H}, R_{F}, R, X et Y ayant les significations indiquées ci-dessus,
et leurs sels.

2. Esters d'acides carboxyliques fluorés contenant des groupes hydroxy et/ou mercapto et d'acides phosphono- ou phosphino-carboxyliques selon la revendication 1, caractérisés en ce que R_{F} représente un groupe fluoralkyle linéaire ou ramifié en C₃-C₁₀.

3. Esters d'acides carboxyliques fluorés contenant des groupes hydroxy et/ou mercapto et d'acides phosphono- ou phosphino-carboxyliques selon la revendication 1, caractérisés en ce que R_{H} représente un groupe alkyle en C₁ ou C₂.

4. Composés selon la revendication 1, caractérisés en ce que n est égal à 1 ou 2.

5. Composés selon la revendication 1, caractérisés en ce que m est égal à 1.

6. Procédé pour la préparation des esters d'acides carboxyliques fluorés contenant des groupes hydroxy et/ou mercapto et d'acides phosphono- ou phosphino-carboxyliques selon les revendications 1 à 5, caractérisé en ce que, dans une synthèse à plusieurs étapes, on estérifie dans un premier stade les acides phosphono- ou phosphino-carboxyiques correspondants de formule II ou leurs sels de formule : 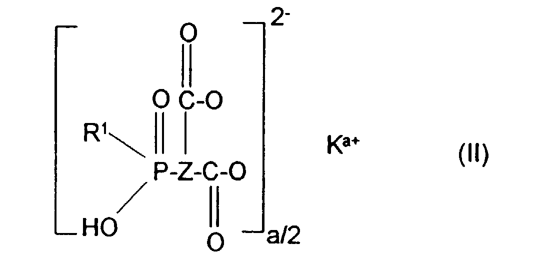 dans laquelle K représente un cation hydrogène, un cation ammonium ou un cation de métal mono- ou polyvalent et a est n nombre entier correspondant à la charge du cation K, R¹ et Z ayant les significations indiquées ci-dessus, par les alcools corrrespondants à groupes fluorés de formule (III) 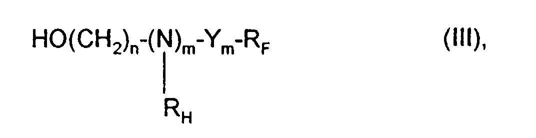 dans laquelle n, m, R_{H}, Y et R_{F} ont les significations indiquées ci-dessus, et dans un autre stade opératoire, on estérifie par les alcools polyvalents ou thiols à fonction hydroxy correspondants de formule (IV)
HO-X-R (IV)
dans laquelle X et R ont les significations indiquées ci-dessus.

7. Utilisation des esters d'acides carboxyliques fluorés contenant des groupes hydroxy et/ou mercapto et d'acides phosphono- ou phosphino-carboxyliques selon l'invention en tant qu'agents hydrofugeants et/ou oléofugeants.
